# FASCICULE DE BREVET EUROPEEN

(11) **EP 0 784 445 B1**
(45) Date de publication et mention de la délivrance du brevet: **29.04.1998**
(21) Numéro de dépôt: 95933475.6
(22) Date de dépôt: 04.10.1995
(51) Int. Cl.: A47J 42/56, A47J 43/044

(54) **APPAREIL MENAGER A COUTEAU ROTATIF, TEL QU'UN HACHOIR**
KÜCHENMASCHINE MIT ROTIERENDEM MESSER, SOWIE EIN HÄCKSLER
DOMESTIC APPLIANCE WITH A ROTARY CUTTING BLADE SUCH AS A MINCER

(30) Priorité: 06.10.1994 FR 9411970
(43) Date de publication de la demande: 23.07.1997
(73) Titulaire: MOULINEX S.A., 75008 Paris (FR)
(72) Inventeur: LAIGNEAU, Gilles, F-61250 Valframbert (FR); TROCHERIE, Jean-Pierre, F-53370 Saint-Pierre-des-Nids (FR)
(74) Mandataire: Busquets, Jean-Pierre
(86) Numéro de dépôt international: FR9501285
(87) Numéro de publication internationale: WO9610943

(56) Documents cités:
- EP-A- 0 013 805
- EP-A- 0 233 515
- EP-A- 0 529 287
- DE-A- 2 250 177
- FR-A- 1 164 016

## Description

La présente invention se rapporte aux appareils ménagers, tels que des hachoirs, comportant un bol qui est fermé par un couvercle amovible et dans lequel s'étend verticalement un arbre rotatif dont l'extrémité inférieure porte un couteau et est engagée dans un palier monté fixe sur le fond du bol, et dont l'extrémité supérieure fait librement saillie à travers une ouverture pratiquée dans le couvercle, et un bloc moteur comprenant un boîtier monté de manière amovible sur le couvercle et renfermant un moteur électrique dont l'arbre de sortie est solidaire d'un entraîneur débouchant sur le fond du boîtier et venant s'accoupler avec l'extrémité supérieure libre de l'arbre portant le couteau.

On sait que de tels appareils ménagers, qualifiés de petits préparateurs culinaires, sont particulièrement efficaces notamment pour hacher, mixer et émulsionner les matières alimentaires.

Un appareil ménager du type défini ci-dessus est connu du document EP-A-0 233 515.

Dans ce type d'appareil, il arrive que, lorsque l'utilisateur retire le bloc moteur en fin d'opération de préparation des aliments, le couteau continue à tourner pendant quelques instants par effet d'inertie de l'arbre qui le porte. Si l'utilisateur enlève alors le couvercle du bol, il peut se présenter pour lui un risque de blessure.

Pour supprimer ce risque, on a proposé, d'après le document EP-A-0 529 287, de réaliser un appareil ménager du type comportant un bol fermé par un couvercle et logeant un arbre rotatif porte-couteau dont la partie supérieure est associée à un premier organe d'accouplement qui est lié, par l'intermédiaire d'un arbre mobile sollicité par un ressort de rappel, à un second organe d'accouplement d'un mixeur à main, ainsi qu'un dispositif pour freiner l'arbre porte-couteau lors du retrait du mixeur, comprenant une surface annulaire ménagée sur le premier organe d'accouplement et destinée, par suite du retrait du mixeur au cours duquel l'arbre mobile remonte sous l'action du ressort de rappel et provoque la remontée du premier organe d'accouplement, à venir en friction sur une surface périphérique d'un bord d'une ouverture pratiquée dans le couvercle. Un tel dispositif de freinage du couteau est toutefois d'une structure complexe car il fait intervenir de nombreuses pièces pour assurer le freinage du couteau lors du retrait du mixeur, est coûteux et mal adapté à la fabrication en grande série.

L'invention a pour but de remédier à ces inconvénients et de réaliser un appareil ménager à couteau rotatif, tel qu'un hachoir, du type exposé ci-dessus, qui ait un fonctionnement sûr et qui satisfasse une norme actuelle de sécurité selon laquelle, par suite du retrait du bloc moteur alimenté, le couteau doit être arrêté au plus tard 1,5 seconde avant que le couvercle ne soit complètement enlevé.

Selon l'invention, l'appareil ménager comporte de plus un dispositif pour freiner le mouvement de rotation du couteau dès le retrait du bloc moteur, ce dispositif de freinage comportant une bague cylindrique faisant office d'amortisseur, réalisée en un matériau plastique, encastrée dans l'ouverture du couvercle et qui est traversée, avec un léger jeu périphérique, par l'extrémité supérieure libre de l'arbre portant le couteau, ladite bague agissant par friction sur l'extrémité supérieure libre de l'arbre portant le couteau lors du retrait du bloc moteur, ledit arbre étant devenu fou en rotation par suite de son désaccouplement d'avec l'entraîneur solidaire de l'arbre de sortie du moteur.

Ainsi, l'invention utilise judicieusement la région de l'ouverture du couvercle pour y monter la bague de freinage du couteau, de telle sorte que grâce à son emplacement particulier, celle-ci agit très rapidement sur l'extrémité supérieure libre de l'arbre fou portant le couteau, et ce dès le retrait du bloc moteur, c'est-à-dire dès le désaccouplement de l'entraîneur de l'arbre de sortie du moteur d'avec l'extrémité libre de l'arbre portant le couteau, répondant ainsi parfaitement aux exigences de la norme de sécurité susmentionnée. De plus, cette bague plastique faisant office d'amortisseur pour le couteau en vue de son arrêt complet, constitue en soi un moyen de freinage qui est simple, peu onéreux, facile à monter et bien adapté à une fabrication en grande série de ces appareils ménagers.

Les caractéristiques et avantages de l'invention ressortiront d'ailleurs de la description qui va suivre, à titre d'exemple non limitatif, en référence aux dessins annexés dans lesquels :
- la figure 1 est une vue schématique en coupe verticale d'un appareil ménager en fonctionnement selon l'invention ; et
- la figure 2 est une vue analogue à la figure 1, mais montrant un bloc moteur en position retirée et, d'une manière exagérée, un couteau en position arrêtée au moyen d'un dispositif de freinage.

Sur ces deux figures, les mêmes références se rapportent aux mêmes éléments qui remplissent les mêmes fonctions.

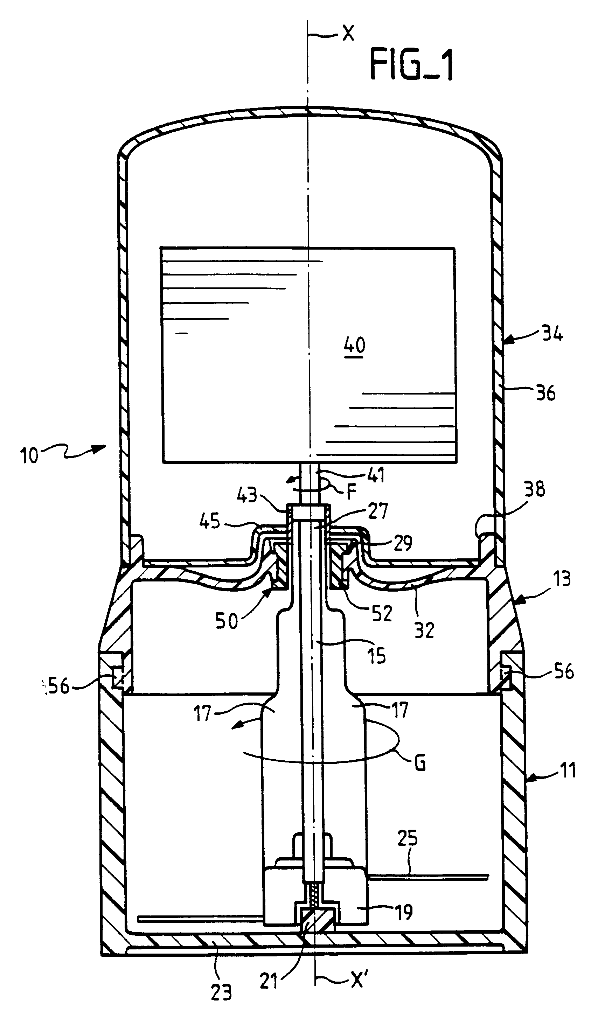

L'appareil ménager 10 représenté schématiquement à la figure 1 est un petit hachoir de forme générale cylindrique d'axe XX'. Il comporte un bol de travail 11 qui est fermé par un couvercle amovible 13 et dans lequel s'étend verticalement, selon l'axe XX', un arbre rotatif 15 qui est pourvu latéralement de larges nervures verticales de brassage 17, et dont l'extrémité inférieure 19, d'une part, est engagée de manière amovible, avec un léger jeu périphérique, dans un palier cylindrique 21 axé sur l'axe XX' et monté fixe sur la paroi de fond 23 du bol 11, et d'autre part, porte un couteau surmoulé 25, par exemple à deux lames. L'extrémité supérieure 27 de l'arbre 15 fait librement saillie à travers une ouverture 29 pratiquée dans la face supérieure 32 du couvercle 13.

D'une manière connue en soi, l'arbre 15 et ses nervures de brassage 17 sont réalisés en une matière plastique propre à un contact avec les matières alimentaires contenues dans le bol.

Le hachoir comporte en outre un bloc moteur 34 comprenant un boîtier 36 monté de manière amovible autour d'une collerette circulaire 38 formée sur la face supérieure 32 du couvercle 13 et renfermant un moteur électrique illustré schématiquement en 40 sur la figure 1, dont l'arbre de sortie 41 est coaxial à l'arbre 15 (figure 1) et est solidaire d'un entraîneur 43 débouchant sur le fond 45 du boîtier 36 et s'accouplant directement avec l'extrémité supérieure libre 27 de l'arbre 15, voir figure 1.

Selon l'invention, le hachoir comporte de plus un dispositif 50 pour freiner le mouvement de rotation du couteau 25 dès le retrait du bloc moteur 34, qui est agencé dans la région de l'ouverture 29 du couvercle 13 et qui agit sur l'extrémité supérieure libre 27 de l'arbre 15 portant le couteau afin de l'arrêter.

Dans une réalisation préférée illustrée à la figure 1, le dispositif de freinage 50 comporte une bague cylindrique tubulaire 52, réalisée en une matière plastique telle que par exemple un élastomère du type silicone, et encastrée dans l'ouverture 29 du couvercle 13.

Comme on le voit sur la figure 1 illustrant le hachoir en fonctionnement, la bague 52 est traversée, avec un léger jeu périphérique, par l'extrémité supérieure 27 de l'arbre 15 accouplé à l'entraîneur 43. Sur cette figure 1, on a symbolisé par les deux flèches F et G les mouvements de rotation respectifs de l'arbre de sortie 41 du moteur 40 et de l'arbre 15 portant le couteau 25.

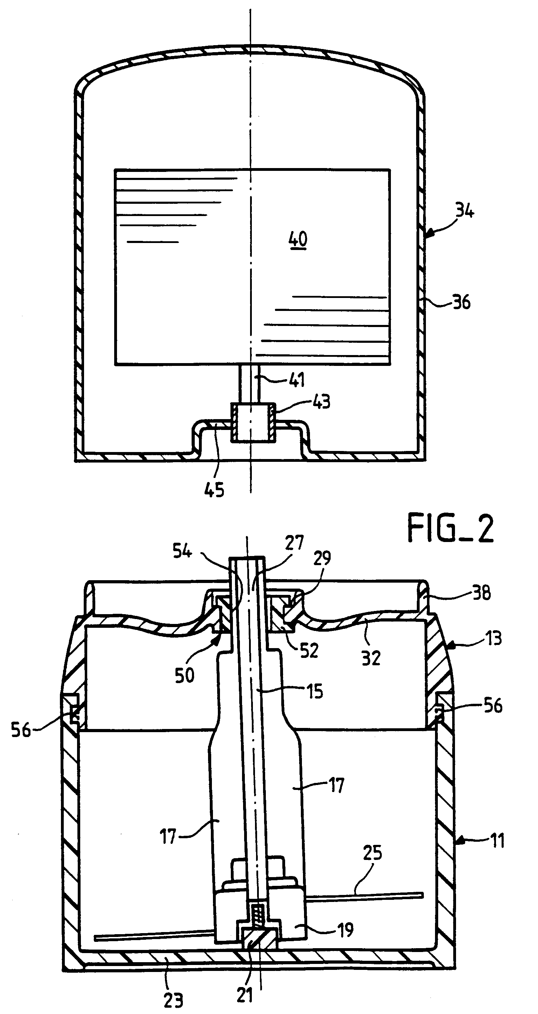

Sur la figure 2, on a illustré d'une manière volontairement exagérée dans un souci de clarté le couteau 25 freiné par la bague 52 dès le retrait du bloc moteur 34. A cet effet, par suite du désaccouplement de l'arbre 15 portant le couteau 25 d'avec l'entraîneur 43, ledit arbre 15 se désaxe en devenant fou en rotation et son extrémité supérieure libre 27 brinquebale dans la bague 52 qui fait office d'amortisseur agissant par friction sur l'extrémité libre 27 de l'arbre fou 15, comme représenté en 54 sur la figure 2, freinant ainsi rapidement l'arbre 15 portant le couteau 25.

De manière à augmenter la rapidité de freinage du couteau 25, l'extrémité supérieure libre 27 de l'arbre 15 présente, au niveau de son engagement dans la bague 52, une surface rugueuse, de préférence granitée.

Il convient de souligner que la présence du léger jeu périphérique entre l'extrémité inférieure 19 de l'arbre 15 portant le couteau 25 et le palier fixe 21 de montage dudit arbre, figure 1, permet avantageusement de favoriser, suite au retrait du bloc moteur 34, le débattement fou de l'extrémité supérieure 27 de l'arbre 15 en vue de son freinage par la bague 52.

Par ailleurs, on notera que le bord de l'ouverture 29 du couvercle 13 peut en soi constituer un dispositif de freinage et présente à cet effet, par exemple, une surface très rugueuse, ou encore des dents ou analogues propres à freiner le couteau 25, sans sortir pour cela du cadre de l'invention.

Dans l'exemple de réalisation des figures 1 et 2, le couvercle 13 est fixé au bol de travail 11 au moyen d'un dispositif de verrouillage réversible 56, en l'occurrence du type à baïonnette, permettant ainsi d'empêcher toute ouverture inopinée du couvercle 13 susceptible de se produire en cas de renversement involontaire du bol fermé 11 contenant les matières alimentaires une fois préparées.

On a donc réalisé suivant l'invention un appareil ménager, tel qu'un hachoir, équipé d'un dispositif de freinage du couteau qui est particulièrement avantageux tant du point de vue coût de fabrication que du point de vue de l'obtention quasi instantanée de l'arrêt du couteau dès le retrait du bloc moteur.

## Revendications

1. Appareil ménager à couteau rotatif, tel qu'un hachoir, comportant un bol (11) qui est fermé par un couvercle amovible (13) et dans lequel s'étend verticalement un arbre rotatif (15) dont l'extrémité inférieure (19) porte un couteau (25) et est engagée dans un palier (21) monté fixe sur le fond du bol, et dont l'extrémité supérieure (27) fait librement saillie à travers une ouverture (29) pratiquée dans le couvercle (13), et un bloc moteur (34) comprenant un boîtier (36) monté de manière amovible sur le couvercle (13) et renfermant un moteur électrique (40) dont l'arbre de sortie (41) est solidaire d'un entraîneur (43) débouchant sur le fond du boîtier (36) et venant s'accoupler avec l'extrémité supérieure libre (27) de l'arbre (15) portant le couteau,
**caractérisé en ce qu'**il comporte de plus un dispositif (50) pour freiner le mouvement de rotation du couteau (25) dès le retrait du bloc moteur (34), ce dispositif de freinage comportant une bague cylindrique tubulaire (52) faisant office d'amortisseur, réalisée en un matériau plastique, encastrée dans l'ouverture (29) du couvercle (13) et qui est traversée, avec un léger jeu périphérique, par l'extrémité supérieure libre (27) de l'arbre (15) portant le couteau, ladite bague (52) agissant par friction sur l'extrémité supérieure libre (27) de l'arbre (15) portant le couteau lors du retrait du bloc moteur (34), ledit arbre (15) étant devenu fou en rotation par suite de son désaccouplement d'avec l'entraîneur (43) solidaire de l'arbre de sortie (41) du moteur (40).

2. Appareil ménager selon la revendication 1,
**caractérisé en ce que** le matériau plastique de la bague (52) est un élastomère du type silicone.

3. Appareil ménager selon la revendication 1 ou 2,
**caractérisé en ce que** l'extrémité supérieure libre (27) de l'arbre (15) portant le couteau présente, au niveau de son engagement dans la bague (52), une surface rugueuse.

4. Appareil ménager selon l'une des revendications 1 à 3,
**caractérisé en ce que** l'extrémité inférieure (19) de l'arbre (15) portant le couteau est engagée avec un léger jeu périphérique dans le palier (21) monté sur le fond du bol de manière à favoriser, par suite du retrait du bloc moteur (34), le débattement fou de l'extrémité supérieure (27) de l'arbre (15) portant le couteau en vue de son freinage par la bague (52).

5. Appareil ménager selon l'une quelconque des revendications précédentes,
**caractérisé en ce que** l'arbre (15) portant le couteau (25) est réalisé en une matière plastique.

6. Appareil ménager selon l'une quelconque des revendications précédentes,
**caractérisé en ce que** le bol (11) est fermé par le couvercle (13) au moyen d'un dispositif de verrouillage réversible (56).

7. Appareil ménager selon la revendication 6,
**caractérisé en ce que** le dispositif de verrouillage réversible (56) est un dispositif à baïonnette.

## Claims

1. A domestic appliance with a rotatable knife, such as a mincer, comprising a bowl (11) which is closed by a removable cover (13) and in which there is a vertically extending rotatable shaft (15) , the lower end (19) of which carries a knife (25) and is engaged in a bearing (21) mounted fixed to the bottom of the bowl, and the upper end (27) of which projects freely through an opening (29) made in the cover (13), and a motor block (34) comprising a casing (36) mounted in a removable manner on the cover (13) and enclosing an electric motor (40) the output shaft (41) of which is fixed to an entraining device (43) opening on the bottom of the casing (36) and designed to become coupled to the free upper end (27) of the shaft (15) bearing the knife,
**characterised in that** it also comprises a device (50) for braking the rotational movement of the knife (25) as soon as the motor block (34) is removed, this braking device comprising a cylindrical tubular collar (52), made of a plastic material, which acts as a brake and is embedded in the opening (29) of the cover (13), and through which the free upper end (27) of the shaft (15) bearing the knife passes with a small peripheral play, said collar (52) acting by friction on the free upper end (27) of the shaft (15) bearing the knife at the time of the withdrawal of the motor block (34), said shaft (15) having started to rotate idly as a result of its uncoupling from the entraining device (43) fixed to the output shaft (41) of the motor (40).

2. A domestic appliance in accordance with claim 1,
**characterised in that** the plastic material of the collar (52) is a silicone type elastomer.

3. A domestic appliance in accordance with claim 1 or 2,
**characterised in that** the free upper end (27) of the shaft (15) bearing the knife comprises a roughened surface in the region where it engages in the collar (52).

4. A domestic appliance in accordance with any one of claims 1 to 3,
**characterised in that** the lower end (19) of the shaft (15) bearing the knife is engaged with a slight peripheral play in the bearing (21) mounted on the bottom of the bowl so as to favour, as a result of the withdrawal of the motor block (34), the free sideways movement of the upper end (27) of the shaft (15) bearing the knife in order to achieve its braking by the collar (52).

5. A domestic appliance in accordance with any one of the preceding claims,
**characterised in that** the shaft (15) bearing the knife (25) is made of a plastic material.

6. A domestic appliance in accordance with any one of the preceding claims,
**characterised in that** the bowl (11) is closed by the cover (13) by means of a reversible locking device (56).

7. A domestic appliance in accordance with claim 6,
**characterised in that** the reversible locking device (56) is a bayonet-type device.

## Patentansprüche

1. Küchengerät mit rotierendem Messer, wie beispielsweise ein Häcksler, mit einem durch einen abnehmbaren Deckel (13) geschlossenen Behälter (11), in dem sich vertikal eine drehbare Welle (15) erstreckt, deren unteres Ende (19) ein Messer (25) trägt und in ein fest am Boden des Behälters montiertes Lager (21) eingeschoben ist, und deren oberes Ende (27) durch eine im Deckel (13) ausgebildete Öffnung (29) frei hervorsteht, und einem Motorblock (34), der ein am Deckel (13) abnehmbar gehaltenes Gehäuse (36) aufweist, das einen Elektromotor (40) umschließt, dessen Abtriebswelle (41) fest mit einem am Boden des Gehäuses (36) mündenden Mitnehmer (43) verbunden ist, der sich an das obere freie Ende (27) der das Messer tragenden Welle (15) ankuppelt, **dadurch gekennzeichnet, daß** es außerdem eine Vorrichtung (50) zum Bremsen der Drehbewegung des Messers (50) sofort nach Abnehmen des Motorblocks (34) aufweist, wobei diese Bremsvorrichtung einen zylindrischen rohrförmigen Ring (52) aufweist, der als Dämpfer dient, aus Kunststoffmaterial hergestellt ist, in der Öffnung (29) des Deckels (13) eingebaut ist, und mit einem leichten Umfangsspiel von dem oberen freien Ende (27) der das Messer tragenden Welle (27) durchsetzt ist, wobei der Ring (52) durch Reibung auf das obere freie Ende (27) der das Messer tragenden Welle (15) wirkt, wenn der Motorblock (34) abgenommen wird, da die Welle (15) nach ihrer Abkupplung vom mit der Abtriebswelle (41) des Motors (40) fest verbundenen Mitnehmer (43) frei dreht.

2. Küchengerät nach Anspruch 1, **dadurch gekennzeichnet, daß** das Kunststoffmaterial des Rings (52) ein Elastomer vom Typ Silikon ist.

3. Küchengerät nach Anspruch 1 oder 2, **dadurch gekennzeichnet, daß** das obere freie Ende (27) der das Messer tragenden Welle (15) auf Höhe ihres Einschubs in den Ring (52) eine rauhe Oberfläche aufweist.

4. Küchengerät nach einem der Ansprüche 1 bis 3,**dadurch gekennzeichnet, daß** das untere Ende (19) der das Messer tragenden Welle (15) mit einem leichten Umfangsspiel in das am Boden des Behälters montierten Lager (21) eingeschoben ist und so nach Abnehmen des Motorblocks (34) das freie Hin- und Herschlagen des oberen Endes (27) der das Messer tragenden Welle (15) zu deren Abbremsen durch den Ring (52) begünstigt.

5. Küchengerät nach einem der vorangehenden Ansprüche, **dadurch gekennzeichnet, daß** die das Messer tragende Welle (15) aus Kunststoffmaterial hergestellt ist.

6. Küchengerät nach einem der vorangehenden Ansprüche, **dadurch gekennzeichnet, daß** der Behälter (11) vom Deckel (13) mittels einer reversiblen Verriegelungsvorrichtung (56) geschlossen ist.

7. Küchengerät nach Anspruch 6, **dadurch gekennzeichnet, daß** die reversible Verriegelungsvorrichtung (56) ein Bajonettverschluß ist.
